# FASCICULE DE BREVET EUROPEEN

(11) **EP 4 056 962 B1**
(45) Date de publication et mention de la délivrance du brevet: **23.10.2024**
(21) Numéro de dépôt: 22153517.2
(22) Date de dépôt: 26.01.2022
(51) Int. Cl.: G01F 22/02, G01F 23/18, F17C 13/02, G01F 23/00

(54) **RÉCIPIENT DE GAZ SOUS PRESSION AVEC DISPOSITIF ÉLECTRONIQUE DE CALCUL ET D'AFFICHAGE RÉACTUALISÉ D'AUTONOMIE EN GAZ**
DRUCKBEHÄLTER FÜR GASE MIT ELEKTRONISCHER VORRICHTUNG ZUR BERECHNUNG UND AKTUALISIERTEN ANZEIGE DER GASMENGE
PRESSURISED GAS CONTAINER WITH ELECTRONIC DEVICE FOR CALCULATION AND UPDATED DISPLAY OF GAS AUTONOMY

(30) Priorité: 08.03.2021 FR 2102188
(43) Date de publication de la demande: 14.09.2022
(73) Titulaire: L'Air Liquide, société anonyme pour l'Étude et l'Exploitation des procédés Georges Claude, 75007 Paris (FR)
(72) Inventeur: MARY, Alexis, 1804 Zemst (BE); MORIN, Bertrand, 92182 Antony Cedex (FR); PATEAU, Valérie, 92182 Antony Cedex (FR)
(74) Mandataire: Air Liquide

(56) Documents cités:
- FR-A1- 3 016 679
- FR-A1- 3 075 310
- US-A1- 2007 151 350
- US-A1- 2016 282 165
- US-A1- 2016 377 471
- US-B1- 10 151 405

## Description

L'invention concerne un récipient de fluide (e.g. gaz) sous pression, en particulier une bouteille de gaz, équipé d'un robinet de distribution de fluide comprenant un dispositif électronique permettant de calculer l'autonomie en fluide et l'afficher de manière réactualisée au fil du temps d'utilisation du récipient de fluide, et son utilisation pour stocker et/ou fournir un fluide sous pression, en particulier un gaz médical, tel l'oxygène ou un autre gaz ou mélange gazeux.

Les fluides ou gaz médicaux, tel l'oxygène, les mélanges NO/N₂, N₂O/O₂, He/O₂, l'air médical ou autre, sont généralement conditionnés dans des récipients de gaz sous pression, telles des bouteilles ou bonbonnes de gaz, qui sont équipés d'un robinet de distribution, avec (RDI) ou sans système de détente intégré, et avec organe de sélection de débit, par exemple un volant rotatif, servant à fournir le gaz médical à un débit sélectionné par l'utilisateur et d'un manomètre à aiguille ou d'un dispositif électronique à afficheur numérique servant à afficher la pression de gaz résiduelle ou une autonomie en gaz. Ainsi, EP-A-2918892 propose une bouteille de gaz équipée d'un RDI et d'un dispositif électronique à écran d'affichage numérique, i.e. digital.

Le dispositif électronique comprend un ou des capteurs de pression et de température transmettant leurs mesures à un microprocesseur coopérant lui-même avec un écran d'affichage pour traiter les mesures et calculer puis afficher notamment le volume de gaz résiduel, la pression de gaz et surtout l'autonomie résiduelle en gaz, généralement exprimée en heures et minutes, notamment en fonction du débit de gaz sélectionné via l'organe de sélection de débit et délivré par le robinet de distribution.

Un exemple de récipient de gaz sous pression équipé d'un robinet de distribution de fluide et d'un dispositif électronique est donné par FR-A-3016679.

Il est primordial de pouvoir afficher une autonomie exacte, en particulier lorsque que le gaz est un gaz médical qui est administré à un patient, par exemple de l'oxygène, afin que le patient ne se retrouve pas en manque de gaz, du fait d'une autonomie erronée, c'est-à-dire surestimée et donc trop optimiste.

Pour déterminer l'autonomie restante, on utilise un capteur de pression afin de réaliser des mesures de pression successives servant à calculer une variation de pression pendant une durée donnée et en déduire l'autonomie. Toutefois, un tel calcul ne peut être instantané puisqu'il doit se baser sur un nombre suffisant de valeurs de pression mesurées au fil du temps. L'affichage d'autonomie ne peut dès lors être effectué qu'après une durée d'utilisation de plusieurs minutes, typiquement 2 à 10 minutes, aussi appelé « temps de temporisation ». On comprend cependant que ceci n'est pas satisfaisant, lorsqu'un personnel soignant souhaite connaître immédiatement l'autonomie en gaz d'une bouteille de gaz qu'il commence à utiliser pour traiter un patient.

Pour y remédier, il a été proposé de déterminer l'autonomie restante, pendant la phase initiale ou « temps de temporisation », i.e. typiquement pendant les 2 à 10 premières minutes d'utilisation du récipient de fluide, à partir de la position de l'organe de sélection du débit, des valeurs de pression et de température du fluide mesurées, et du volume connu du récipient de fluide. Ceci évite à l'utilisateur de devoir attendre plusieurs minutes avant de connaître l'autonomie restante.

Néanmoins, il a été remarqué que l'affichage de l'autonomie restante, typiquement une durée exprimée en heure(s) et minute(s), est assez imprécis et/ou fluctue, c'est-à-dire monte ou descend régulièrement au cours de l'utilisation du récipient de fluide.

Afin de minimiser ces fluctuations, le microprocesseur du dispositif électronique est souvent configuré pour faire décroître l'autonomie sur des périodes de temps longues, voire très longues, par exemple 10 minutes par 10 minutes, 30 minutes par 30 minutes, voire heure par heure. Toutefois, si cela permet d'éviter de fortes fluctuations de l'autonomie affichée, cela conduit à fournir une autonomie présentant une certaine incertitude et donc engendrant un niveau de confiance faible pour l'utilisateur.

Actuellement, un utilisateur s'attend à voir l'autonomie être réactualisée sur des périodes beaucoup plus courtes, typiquement décroître minute par minute par exemple, et sans fortes fluctuations.

Or, plusieurs phénomènes accroissent la difficulté à présenter une autonomie décroissant minute par minute, à savoir notamment l'imprécision du capteur de pression (e.g. variations de 100 mbar entre 2 mesures de pression), les phénomènes de température (e.g. détente du gaz qui refroidit lors de son utilisation), les restrictions de consommation énergétique pour économiser la batterie (i.e. limiter le nombre d'échantillons et la durée de calcul), la réactivité pour l'affichage voulue par l'utilisateur (i.e. afficher l'autonomie en moins de 1 sec), l'utilisation de débits faible (i.e. quelques L/min entraînant une faible chute de pression qui est comparable à l'imprécision du capteur), un remplissage à pression élevée de la bouteille de gaz...

Autrement dit, l'affichage de l'autonomie sur le dispositif électronique équipant le robinet de distribution de fluide d'un récipient de fluide sous pression, typiquement une bouteille de gaz, est souvent peu fiable car l'autonomie peut fluctuer de manière plus ou moins important au fil du temps, c'est-à-dire lors des réactualisations de l'affichage de l'autonomie, ce qui peut engendrer des problèmes de sécurité d'utilisation, en particulier lors d'une utilisation dans le domaine de la santé.

Un problème est dès lors de pouvoir fournir à l'utilisateur l'autonomie résiduelle d'un récipient de fluide sous pression, typiquement une bouteille de gaz, équipé d'un robinet de distribution de fluide équipé d'un dispositif électronique à microprocesseur, qui soit moins fluctuante et donc plus fiable pour l'utilisateur.

Une solution de l'invention concerne alors un récipient de gaz sous pression, en particulier une bouteille de gaz, ayant un volume interne donné, i.e. de volume connu et mémorisé, comprenant un robinet de distribution de gaz comprenant :
- un organe de sélection du débit, manipulable par un utilisateur, entre plusieurs positions distinctes correspondant chacune à un débit de gaz donné,
- au moins un capteur de position configuré pour détecter la position de l'organe de réglage du débit,
- et un dispositif électronique comprenant :
   ▪ des moyens de mesure de pression et de température pour mesurer la pression et la température du gaz contenu dans le récipient de gaz,
   ▪ des moyens de traitement de données comprenant au moins un microprocesseur configurés pour calculer une autonomie en gaz à partir de tout ou partie des mesures de pression et/ou de température, de la position de l'organe de sélection de débit et du volume interne du récipient,
   ▪ un compteur temporel,
   ▪ des moyens de mémorisation pour mémoriser au moins un historique comprenant les mesures de pression et de température opérées par les moyens de mesure de pression et de température,
   ▪ et des moyens d'affichage pour afficher l'autonomie en gaz calculée par les moyens de traitement de données.

Selon l'invention, les moyens de traitement de données sont configurés pour :
A) pendant une phase initiale de temporisation inférieure à 10 minutes, débutant lorsque l'organe de sélection du débit est manipulé par l'utilisateur pour le faire passer d'une première position correspondant à un premier débit de gaz à une deuxième position correspondant à un deuxième débit de gaz:
   i) calculer une autonomie en gaz à partir de la position de l'organe de sélection du débit, des mesures de pression et de température du gaz, et du volume interne du récipient de gaz,
   ii) commander un affichage de l'autonomie calculée (Ac) à l'étape A) i) sur les moyens d'affichage, et
   iii) procéder à une réactualisation, après un délai de 1 minute, de l'affichage de l'autonomie affichée en commandant un affichage sur les moyens d'affichage, d'une autonomie réactualisée égale à l'autonomie affichée à laquelle une durée de 1 minute est soustraite,
B) répéter l'étape A) iii) pendant toute la phase initiale de temporisation, pour afficher une autonomie réactualisée (Ar) après un intervalle de temps compris entre 30 secondes et 5 minutes, pendant toute ladite phase initiale de temporisation, et
C) calculer, après la phase initiale de temporisation, au moins une autonomie calculée (Ac) à partir de l'historique des mesures de pression et de température du gaz mémorisées, et du volume interne du récipient de gaz.

Selon le mode de réalisation considéré, le récipient de gaz selon l'invention, typiquement une bouteille de gaz, peut comprendre l'une ou plusieurs des caractéristiques suivantes :
- à l'étape B), l'intervalle de temps est préférentiellement compris entre 30 secondes et 4 minutes, de préférence encore entre 30 secondes et 3 minutes.
- à l'étape B), l'autonomie réactualisée (Ar) est réactualisée et affichée à des intervalles de temps de l'ordre de 1 minute, c'est-à-dire minute par minute.
- les moyens de traitement de données sont en outre configurés pour :

D) comparer l'autonomie calculée (Ac) à l'autonomie réactualisée (Ar) affichée sur les moyens d'affichage à l'étape B) et
E) commander un affichage sur les moyens d'affichage de :
i) l'autonomie réactualisée (Ar) lorsque : 0,9.Ar ≤ Ac ≤ 1,1.Ar, ou
ii) l'autonomie calculée (Ac) lorsque : Ac < 0,9.Ar ou Ac > 1,1.Ar.

- les moyens de traitement de données sont en outre configurés pour répéter les étapes C), D) et E) de manière à réactualiser l'affichage de l'autonomie après une période de réactualisation comprise entre 30 secondes et 3 minutes
- les moyens de traitement de données sont en outre configurés pour fixer la durée de la période de réactualisation en fonction de l'écart entre l'autonomie calculée (Ac) et l'autonomie réactualisée (Ar).
- la durée de la période de réactualisation est de l'ordre de 1 minute lorsqu'à l'étape E) ii), l'autonomie calculée (Ac) est affichée sur les moyens d'affichage.
- les moyens de traitement de données sont configurés pour afficher l'autonomie calculée (Ac) lorsque lesdits moyens de traitement de données déterminent, à l'étape D), que l'autonomie calculée (Ac) et l'autonomie réactualisée (Ar) diffèrent l'une de l'autre d'au moins 10 minutes, de préférence d'au moins 15 minutes.
- selon un mode de réalisation, les moyens de traitement de données sont configurés pour toujours afficher l'autonomie calculée (Ac) lorsque l'autonomie est inférieure ou égale à un seuil de sécurité préfixé, de préférence un seuil de sécurité inférieur ou égal à 30 minutes.
- selon un autre mode de réalisation, les moyens de traitement de données sont configurés pour afficher l'autonomie calculée (Ac) lorsque l'autonomie est inférieure ou égale à l'autonomie réactualisée (Ar) affichée.
- le compteur temporel est intégré aux moyens de traitement de données, en particulier piloté par un microprocesseur.
- les moyens de traitement de données comprennent un ou plusieurs microprocesseurs.
- l'organe de sélection de débit est configuré pour adopter plusieurs positions distinctes correspondant chacune à un débit de gaz donné compris entre 0 et 30 L/min, ledit organe de sélection du débit étant manipulable en rotation (horaire ou antihoraire) par un utilisateur pour sélectionner le débit désiré.
- les positions sélectionnables sont des positions angulairement décalées.
- la phase de temporisation a une durée non-nulle et inférieure à 7 minutes, typiquement de l'ordre de 3 à 6 minutes.
- le volume donné du récipient de gaz est mémorisé par les moyens de traitement de données, en particulier par le microprocesseur ou des moyens de mémorisation.
- le volume donné du récipient de gaz est compris entre 1 et 20 L, de préférence entre 2 et 15 L (équivalent en eau).
- l'organe de sélection du débit comprend un organe rotatif, de préférence un volant rotatif ou analogue.
- les moyens de mesure de pression et de température comprennent un capteur unique de pression et de température configuré pour opérer à la fois des mesures de pression et de température du gaz.
- alternativement, les moyens de mesure de pression et de température comprennent un capteur de pression et un capteur de température distincts l'un de l'autre.
- le ou les capteurs de pression et de température est/sont en communication fluidique avec un circuit de gaz interne du robinet de distribution de fluide de manière à y opérer les mesures de pression et de température.
- le ou les capteurs est/sont connectés électriquement aux moyens de traitement de données pour fournir des mesures (i.e. signaux) de pression et de température du fluide auxdits moyens de traitement de données.
- le ou les capteurs est/sont configuré pour mesurer des températures comprises entre -40°C et +70°C.
- le capteur unique de pression et de température comprend un corps de capteur traversé par un passage interne permettant de mesurer la pression et la température, c'est-à-dire constituant un piquage unique de prise de pression et de température.
- les moyens de traitement de données comprennent un ou plusieurs microprocesseurs mettant en oeuvre un ou plusieurs algorithmes.
- le (ou les) microprocesseur, sont configurés pour traiter la ou les mesures de pression et de température fournies par le capteur unique de pression et de température.
- les moyens de traitement de données comprennent une carte électronique.
- les moyens de traitement de données comprennent au moins un microcontrôleur. Plus précisément, un (ou plusieurs) microprocesseur est intégré sous forme d'un microcontrôleur.
- ledit au moins un microprocesseur est agencé une carte électronique.
- le (ou les) microprocesseur(s), en particulier le (ou les) microcontrôleur, est configuré pour enregistrer des données, notamment au sein d'un logiciel ou algorithme dédié.
- le passage interne de gaz du robinet de distribution de gaz au sein duquel sont opérées les mesures de pression et de température est en communication fluidique avec le volume interne du récipient de gaz.
- le circuit de gaz interne du robinet de distribution de gaz est en communication fluidique avec le volume interne du récipient de gaz servant à stocker le gaz sous pression.
- les moyens de traitement de données et les moyens d'affichage sont alimentés en courant électrique par une source de courant électrique.
- le ou les capteurs sont alimentés en courant électrique par une source de courant électrique.
- le capteur unique de pression et de température comprend une électronique embarquée permettant de déterminer la pression et la température du gaz.
- le capteur unique de pression et de température comprend une électronique embarquée comprenant des moyens à membrane pour déterminer la pression du gaz et des moyens à sonde de température pour mesurer la température du gaz.
- les moyens à membrane et les moyens à sonde de température sont agencés de manière à être en contact avec le gaz véhiculé par le passage interne du corps de capteur, c'est-à-dire un seul et même conduit de gaz.
- l'électronique embarquée du capteur unique de pression et de température est connectée électriquement aux moyens de traitement de données pour leur communiquer des signaux et/ou des valeurs de pression et de température mesurées.
- l'électronique embarquée du capteur unique de pression et de température comprend un (ou plusieurs) microprocesseur additionnel.
- le dispositif électronique est un manomètre digital configuré pour commander un affichage de la pression de fluide, du volume de gaz dans le récipient et/ou du débit de gaz fourni par le robinet et par ailleurs l'autonomie en gaz, i.e. durée d'utilisation par rapport à la quantité de gaz résiduel dans le récipient et/ou au débit de fourniture du gaz par le robinet.
- la source de courant électrique comprend une ou plusieurs batteries ou piles électriques, rechargeables ou non.
- les moyens d'affichage du dispositif électronique comprennent un afficheur numérique, i.e. tel un écran d'affichage d'information, par exemple de type LCD.
- le robinet de distribution de fluide comprend un raccord de sortie en débit pour délivrer le fluide au débit désiré, typiquement un gaz.
- le robinet de distribution de gaz comprend un orifice d'entrée de gaz en communication fluidique avec le circuit de gaz interne du robinet de distribution de gaz de manière à permettre l'entrée de gaz sous pression dans le circuit de gaz interne du robinet de distribution de gaz.
- l'orifice d'entrée de fluide du robinet de distribution de gaz est en communication fluidique avec le volume interne du récipient de gaz.
- le circuit de gaz interne du robinet de distribution de gaz relie fluidiquement l'orifice d'entrée de gaz au raccord de sortie en débit.
- le robinet de distribution de gaz comprend un embout (i.e. une expansion) de fixation fileté de forme tronconique ou cylindrique.
- l'embout de fixation fileté porte l'orifice d'entrée de gaz.
- la bouteille de gaz comprend un col portant un orifice de sortie de gaz communication fluidique avec l'intérieur de la bouteille de gaz, c'est-à-dire avec son volume interne.
- l'orifice de sortie de gaz de la bouteille de gaz est taraudé.
- l'embout de fixation fileté du robinet de distribution de gaz est vissé dans le col taraudé de la bouteille de gaz.
- le circuit de gaz interne du robinet de distribution de gaz est aménagé, par exemple percé, dans le corps du robinet de distribution de gaz.
- le raccord de sortie en débit du robinet de distribution de gaz est configuré pour être connecté fluidiquement à une conduite de gaz flexible ou un autre dispositif utilisant le gaz, tel un dispositif ou appareil médical.
- les moyens de traitement de données sont agencés dans un boitier rigide du dispositif électronique.
- le dispositif de sélection de débit comprend des marquages correspondant aux débits de gaz désirés sélectionnables.
- le dispositif de sélection de débit coopère en outre avec un dispositif de réglage de débit agencé dans le corps du robinet afin de régler le débit à la valeur de débit de gaz désiré.
- le dispositif de réglage de débit comprend un disque à orifices calibré agencé sur le trajet du gaz dans le corps du robinet.
- le raccord de sortie de gaz est agencé au centre du volant rotatif, c'est-à-dire qu'ils sont agencés coaxialement l'un à l'autre.
- l'afficheur numérique du dispositif électronique est configuré pour afficher des informations, en particulier l'autonomie en gaz, une pression de gaz, un volume de gaz ou une icône d'alerte, par exemple d'alerte d'autonomie ou de clampage de tuyau, ou autres.
- il comprend en outre des moyens de mémorisation de données.
- les moyens de mémorisation de données comprennent une mémoire morte, de préférence une EEPROM ou analogue.
- les moyens de mémorisation de données sont agencés sur une carte électronique, de préférence sur la carte électronique portant le microprocesseur.
- le dispositif électronique est fixé au corps du robinet de distribution de gaz, notamment par vissage ou par un système à goupille.
- la source d'énergie électrique alimente électriquement la carte électrique, le (ou les) microprocesseurs, et tous les composants fonctionnant avec du courant électrique, comme l'afficheur numérique, le capteur de pression et de température et/ou une LED d'alerte.
- le robinet de distribution de gaz est protégé par un capotage de protection comprenant un corps de capotage rigide agencé autour dudit robinet de distribution de gaz.
- la source de courant électrique est agencé dans un compartiment du capotage de protection.
- le boîtier du dispositif électronique comprenant l'afficheur numérique est logé dans une ouverture aménagée dans le corps de capotage.
- le corps de capotage définit un volume interne dimensionné pour loger le robinet de distribution de gaz.
- le corps de capotage est en matériau polymère, en métal ou leurs combinaisons.
- le corps de capotage comprend une (ou plusieurs) poignée de portage, de préférence la poignée de portage est agencée de manière à surmonter le capotage, c'est-à-dire qu'elle est située sensiblement au-dessus du capotage.
- le robinet de distribution de gaz est un robinet à détendeur intégré ou RDI.
- des moyens de détente de gaz sont agencés sur le circuit interne de gaz.
- les moyens de détente de gaz comprennent un clapet de détente et un siège de clapet. Ils permettant de réduire la pression du gaz depuis la pression haute du gaz stocké dans le récipient, typiquement plusieurs dizaines à centaines de bar, jusqu'à une pression d'utilisation préfixée plus basse, typiquement de quelques bar, par exemple de 2 à 5 bar abs.
- le robinet de distribution de gaz est en alliage de cuivre, tel du laiton.
- le corps de capotage comprend en outre un système d'accrochage conçu pour permettre son accrochage à un support, en particulier à un barreau de lit d'hôpital ou à un brancard de transport de patient ou analogue.
- le corps de capotage comprend en outre un système d'accrochage mobile, de préférence pivotant.
- le récipient de gaz contient, lorsqu'il est plein, un gaz à une pression d'au moins 130 à 200 bar abs, voire d'au moins 300 bar abs.
- le récipient de gaz a une forme générale cylindrique, en particulier d'ogive, en métal ou alliage métallique (e.g. acier, aluminium....) ou en matériau(x) composite(s).
- le récipient de gaz contient un gaz ou mélange gazeux, tel de l'oxygène, un mélange NO/N₂, O₂/N₂O ou He/O₂, de l'air ou un autre gaz médical.

L'invention va maintenant être mieux comprise grâce à la description détaillée suivante, faite à titre illustratif mais non limitatif, en référence aux figures annexées parmi lesquelles :
Fig. 1 est un schéma de principe d'un récipient de fluide équipé d'un robinet de distribution de gaz à dispositif électronique selon l'invention,
Fig. 2 représente un mode de réalisation d'un récipient de fluide de type bouteille de gaz sous pression selon l'invention, et
Fig. 3 à Fig. 5 sont des exemples d'autonomies mesurées et affichées au fil du temps dans trois situations différentes lors d'un soutirage de gaz d'un récipient de gaz.

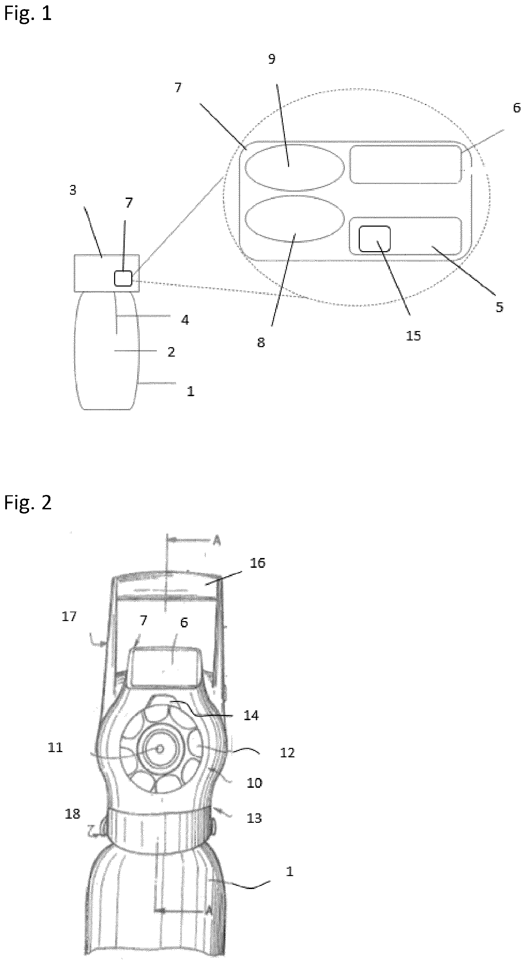

Fig. 1 est un schéma de principe d'un récipient de gaz 1 sous pression selon l'invention, alors que la Fig. 2 représente un mode de réalisation d'un tel récipient 1, à savoir ici une bouteille de gaz sous pression. Un tel récipient de gaz 1 est particulièrement bien adapté pour stocker ou pour fournir un gaz médical (i.e. gaz pur ou mélange gazeux) choisi parmi l'oxygène ou un mélange gazeux de type N₂O/O₂, NO/N₂, He/O₂, ou air médical.

Plus précisément, le récipient de fluide 1 illustré sur Fig. 1 et Fig. 2, comprend un volume interne 2 de stockage de gaz sous pression, par exemple de plus de 200 bar abs (pression à plein), et est équipé d'un robinet de distribution de fluide 3, tel un RDI, traversé par un passage ou circuit interne de fluide (non montré) en communication fluidique avec le volume interne 2 du récipient 1 de manière à convoyer le fluide, à savoir ici du gaz, tel de l'oxygène, au sein du corps du robinet de distribution de gaz 3 jusqu'à un raccord de sortie 11 en débit auquel vient se raccorder fluidiquement par exemple une conduite de gaz flexible (non montrée) ou un autre dispositif utilisant le gaz délivré.

La bouteille ou récipient 1 de gaz sous pression d'axe AA de la Fig. 2 comprend un corps cylindrique et un col, c'est-à-dire qu'elle est en forme d'ogive. Le corps cylindrique définit le volume interne 2 de stockage de gaz sous pression, typiquement une pression maximale de 130 à 300 bar abs, voire au-delà de 300 bar abs. Le col comprend un orifice d'entrée/sortie de fluide communicant avec le volume interne 2 et permettant de soutirer le gaz du volume interne 2 ou, à l'inverse, de le remplir lorsqu'il est vide. Le robinet de distribution de gaz 3 est monté, typiquement vissé, au niveau de l'orifice du col de la bouteille de gaz.

Le récipient 1 a une forme générale cylindrique et est en métal ou alliage métallique (e.g. acier, aluminium...) ou en matériau(x) composite(s). Il contient un gaz ou mélange gazeux, tel de l'oxygène, un mélange NO/N₂, O₂/N₂O ou He/O₂, de l'air ou tout autre gaz médical.

Le robinet de distribution de gaz 3, qui est ici un RDI incluant des moyens de détente interne, est vissé, via une expansion ou un embout de fixation fileté, au niveau du col de la bouteille de gaz, c'est-à-dire qu'il vient se visser dans l'orifice d'entrée/sortie de fluide qui lui porte un taraudage complémentaire.

Le robinet de distribution de gaz 3 comprend par ailleurs un raccord ou embout de distribution de gaz, appelé raccord de sortie en débit 11, auquel peut être raccordé par exemple une conduite de gaz flexible, tel un tuyau en plastique flexible, servant à convoyer le gaz jusqu'à un appareil ou dispositif médical utilisant le gaz fourni par le robinet 3, par exemple un masque respiratoire distribuant du gaz à un patient à un débit prescrit par un médecin ou analogue correspondant un traitement à suivre. Le corps de robinet est préférentiellement en laiton ou en acier inoxydable.

Par ailleurs, le robinet de distribution de gaz 3 comprend soit un capteur de pression et un capteur de température distincts, soit un capteur unique de pression et de température 4 (comme illustré ici) servant à mesurer la pression et la température du gaz, au sein du passage interne de gaz et/ou dans le volume interne 2 du récipient 1, et fournir des mesures de pression (i.e. signaux de mesure) à des moyens de traitement de données 5 à microprocesseur 15, c'est-à-dire un dispositif ou une unité de traitement de données comprenant un ou plusieurs microprocesseurs 15 mettant en oeuvre un ou plusieurs algorithmes, par exemple une carte électronique portant un (ou des) microprocesseur 15 mettant en oeuvre un ou des algorithmes de calcul ou autres, de préférence un microcontrôleur. Les moyens de traitement de données 5 sont aussi appelés moyens de pilotage, électronique de commande ou analogue. De préférence, on utilise un capteur unique de pression et de température 4 car cela simplifie l'architecture générale, notamment en réduisant le nombre de piquages/perçages nécessaires pour opérer les mesures.

Lorsqu'on utilise un capteur unique 4 de pression et de température unique, il peut comprendre un corps de capteur traversé par un passage interne, par exemple un passage axial, c'est-à-dire un conduit ou piquage unique. Le passage interne du capteur est relié fluidiquement au circuit interne de gaz du robinet de distribution 3 de fluide de manière à ce qu'une partie du gaz sous pression véhiculé par le circuit interne de gaz traversant le corps du robinet de distribution 3, vienne remplir ce passage interne du capteur de manière à permettre d'opérer les mesures de pression et de température souhaitées. Pour ce faire, on peut utiliser des moyens à membrane et des moyens à sonde de température connectés à une électronique embarquée dans le capteur unique 4 de pression et de température. Par exemple, une membrane peut être prévue en contact avec le gaz véhiculé par le passage interne pour mesurer la pression du gaz et une sonde de température peut être agencée, par exemple derrière la membrane, pour mesurer la température du gaz amené par le passage interne. Les mesures de pression et de température sont traitées par l'électronique embarquée, par exemple une carte électronique interne à microprocesseur, puis envoyées aux moyens de traitement de données 5 comprenant le microprocesseur 15 afin d'y être utilisées pour déterminer l'autonomie en gaz.

Par ailleurs, les moyens de traitement de données 5 à microprocesseur 15, sont configurés pour traiter les mesures de pression et de température fournies par le ou les capteurs de pression et de température. Ils sont préférentiellement agencés dans le boîtier du dispositif électronique 7, par exemple un manomètre numérique, fixé sur le robinet de distribution de fluide 3, lequel comprend un afficheur numérique 6, tel un écran LCD ou analogue, servant à afficher l'autonomie ou d'autres paramètres.

Il est en outre prévu un dispositif de sélection de débit 12 actionnable par un utilisateur, tel un volant rotatif, servant à sélectionner un débit de gaz désiré devant être délivré par le raccord de sortie 11 en débit, par exemple pour répondre à une prescription d'un médecin ou analogue. Comme illustré en Fig. 2, le dispositif de sélection de débit 12 peut être un volant rotatif apte à se déplacer en rotation entre plusieurs positions angulaires, décalées les uns des autres, qui correspondent chacune à une valeur de débit donnée, à savoir typiquement des valeurs de débit de gaz sélectionnables comprises entre 0 L/min et 30 L/min, de préférence entre 0 et 25 L/min.

Par exemple, les valeurs de débit sélectionnables peuvent être les suivantes : 0, 0.5, 1, 2, 3, 5, 8, 10, 12, 15, 20, 22 et 25 L/min, ou toute autre valeur. La valeur de débit désiré sélectionnée par l'utilisateur par actionnement du dispositif de sélection de débit 12, i.e. volant rotatif, apparaît dans une fenêtre de lecture 14 située au-dessus du dispositif de sélection de débit 12, par exemple une découpe aménagée dans le corps 10 du capotage de protection 13 agencé autour du robinet 3 et servant à le protéger contre les chocs ou autres agressions extérieures.

Le dispositif de sélection de débit 12 coopère en outre avec un dispositif de réglage de débit agencé dans le corps du robinet 3 afin de régler le débit à la valeur de débit de gaz désiré, par exemple le dispositif de réglage de débit peut un disque à orifices calibré agencé sur le trajet du gaz dans le corps du robinet 3. Un tel agencement est connu en soi. Une fois le débit de gaz désiré sélectionné, la position du dispositif de sélection de débit 12, par exemple la position angulaire du volant rotatif, peut être déterminée grâce à un ou plusieurs capteurs de position. Connaître la position angulaire du volant rotatif permet alors aux moyens de traitement de données 5 de connaître la valeur du débit de gaz désiré ayant été sélectionnée.

Dans le mode de réalisation de la Fig. 2, le raccord de sortie en débit 11 est agencé au centre et coaxialement au volant rotatif de sélection de débit 12 ; toutefois, ils pourraient aussi être séparés l'un de l'autre selon d'autres modes de réalisation possibles (non montrés).

Par ailleurs, le (ou les) capteur de pression et de température 4 est configuré et agencé pour mesurer la pression et la température du gaz dans la bouteille 1, c'est-à-dire provenant du volume interne 2, et fournir ensuite les mesures de pression et/ou de température opérées aux moyens de traitement de données 5. Les mesures de pression et de température opérées et transmises par le (ou les) capteur 4 sont par exemple des signaux qui représentent soit des valeurs de pression et/ou de température, soit d'autres grandeurs, comme des valeurs de tension ou de courant, correspondant à des valeurs de pression et/ou de température. Ces mesures de pression et/ou de température sont traitées par les moyens de traitement de données 5 pour déterminer différentes informations, à savoir l'autonomie, voire aussi le volume de gaz dans le récipient 1 ou la pression de gaz dans le récipient 1. Ces informations peuvent être affichées sur l'afficheur 6 à destination d'un utilisateur, typiquement un personnel soignant, comme un médecin ou une infirmière.

Il est aussi prévu un compteur temporel, par exemple interne aux moyens de traitement de données 5, afin de permettre les calculs de durée ou autres suivis temporels, comme expliqué ci-après.

Le volume interne 2 du récipient 1 (en équivalent eau) est une valeur connue qui peut être mémorisée par des moyens de mémorisation 9 soit directement dans un logiciel mis en oeuvre par le microprocesseur 15, soit dans une mémoire informatique de type EEPROM ou analogue, du dispositif électronique 7. La mémoire informatique peut être agencée sur la carte électronique portant le microprocesseur 15 et reliée électriquement à ce dernier. Par exemple, les bouteilles de gaz équipées de ce type utilisées pour distribuer de l'oxygène médical (i.e. de qualité médicale) ont typiquement des volumes internes 2 compris entre 1 L et 20 L (équiv. en eau), typiquement entre 2 L et 15 L, par exemple, selon la bouteille considérée, le volume peut être de l'ordre de 2 L, 3.5 L, 4.6 L, 5 L, 7 L, 10 L, 11 L ou 15 L.

Les moyens de mémorisation 9 peuvent aussi enregistrer d'autres données, comme par exemple la durée s'écoulant entre des instants successifs, les mesures de pression et/ou de température ... ou d'autres paramètres, comme le volume interne de la bouteille, la position du sélecteur, la configuration de la bouteille, la pression de remplissage, les alertes...

Plus généralement, le dispositif électronique 7, par exemple un manomètre numérique, qui comprend les moyens de traitement de données 5 à microprocesseur 15, telle une carte électronique, est logé dans une ouverture ou logement prévu dans le corps 10 du capotage de protection 13 agencé autour du robinet de distribution de fluide 3 et servant à le protéger contre les chocs ou autres détériorations possibles, par exemple un capotage rigide en polymère et/ou en métal, comme illustré en Fig. 2.

Le corps 10 du capotage 13 définit un volume ou logement dimensionné pour loger le robinet de distribution de gaz, à savoir ici un robinet à détendeur intégré ou RDI. Il comprend par ailleurs une (ou plusieurs) poignée de portage 16 agencée ici de manière à surmonter le capotage 13, c'est-à-dire qu'elle est située sensiblement au-dessus du corps 10 du capotage 13, en étant reliée au corps 10 par ici deux montants-supports 17 se projetant sensiblement vers le haut.

Selon un mode de réalisation, le corps 10 de capotage peut comprendre en outre un système d'accrochage 18 (non totalement visible), de préférence une accroche pivotante, conçu pour permettre son accrochage à un support, en particulier à un barreau de lit d'hôpital ou à un brancard de transport de patient ou analogue.

L'afficheur numérique 6 du dispositif électronique 7 comprend un écran numérique, i.e. digital, par exemple à cristaux liquides (LCD) ou autre, porté par le boitier rigide, en particulier la face avant, du dispositif électronique 7, comme illustré en Fig. 2. Il peut être à affichage en couleurs ou en noir et blanc.

L'afficheur numérique 6 est alimenté électriquement par une source d'énergie électrique (non visible) agencée dans le capotage 13, par exemple une ou des batteries ou piles disposées dans un logement à piles aménagé dans la paroi du corps de capotage et fermé par une trappe amovible ou analogue. La source d'énergie électrique sert aussi à alimenter les autres composants du dispositif électronique 7 ayant besoin de courant électrique pour fonctionner, notamment les moyens de traitement de données 5 à microprocesseur 15.

Comme déjà expliqué, l'afficheur numérique 6 du dispositif électronique 7 permet d'afficher toutes les informations utiles à l'utilisateur, comme par exemple des valeurs de pression, de volume de gaz, une autonomie (en heures et minutes) ou d'autres informations ou données, par exemple la valeur du débit de gaz désiré ou réel (en L/min ou en une autre unité), ou l'autonomie en gaz (en heures et minutes) peut aussi être représentée par un barre-graphe. Par exemple, l'afficheur numérique 6 comprend un écran de hauteur comprise entre 29 et 37 mm environ et de largeur par exemple comprise entre 39 et 43 mm environ.

Les moyens de traitement de données 5 à microprocesseur 15, typiquement une carte électronique, sont aussi configurés pour commander des moyens d'alerte sonore et/ou des moyens d'alerte visuelle, de préférence les deux, de manière à déclencher au moins une alerte sonore et/ou une alerte visuelle, de préférence les deux, en cas de détection d'un dysfonctionnement, en particulier un clampage, ou d'une quantité de gaz ou autonomie trop basse.

Afin de permettre aux moyens de traitement de données 5, typiquement au microprocesseur 15, d'opérer un calcul plus précis et de commander un affichage plus rapide par les moyens d'affichage, c'est-à-dire sur l'afficheur numérique 6, de l'autonomie restante de la bouteille de gaz 1 équipée du robinet de distribution de gaz 3 comprenant le sélecteur de débit 12 à organe rotatif de sélection de débit de sortie, les moyens de traitement de données 5 sont configurés pour calculer l'autonomie en fluide
Bien entendu, le calcul de l'autonomie peut nécessiter d'autres paramètres selon la formule de calcul utilisée et/ou la précision désirée, comme le facteur de compressibilité.... Plus généralement, calculer une autonomie à partir de tels paramètres ne pose aucune difficulté. Un exemple de calcul d'autonomie est donné par WO2005/093377.

Selon l'invention, afin de fournir à l'utilisateur l'autonomie résiduelle du récipient 1 de manière moins fluctuante et plus fiable, les moyens de traitement de données 5, typiquement une carte électronique à microprocesseur(s), sont configurés de manière particulière.

Ainsi, pendant une phase initiale de temporisation inférieure à 10 minutes, par exemple pendant 3 à 5 minutes, qui commence lorsque l'organe de sélection du débit 12 est manipulé par l'utilisateur pour régler un débit de gaz désiré en le faisant tourner de manière horaire ou antihoraire afin de le passer d'une première position correspondant à un premier débit de fluide, par exemple 0 L/Min, à une deuxième position correspondant à un deuxième débit de fluide, par exemple 5 L/min, les moyens de traitement de données 5 commencent par calculer une autonomie à partir de la position de l'organe de sélection du débit 12 qui est détecté par le (ou les) capteurs de position, des mesures de pression et de température du gaz, et du volume interne 2 de la bouteille de gaz qui est connu et mémorisé par exemple dans une mémoire des moyens de traitement de données 5.

Ensuite, les moyens de traitement de données 5 commandent l'affichage de l'autonomie ainsi calculée (Ac) sur les moyens d'affichage 6, tel un écran numérique, du dispositif électronique 7 équipant le RDI de la bouteille de gaz.

Enfin, les moyens de traitement de données 5 procèdent à une réactualisation, après un délai de 1 minute, de l'affichage de l'autonomie affichée via un affichage sur les moyens d'affichage 6, d'une autonomie réactualisée qui est égale à l'autonomie affichée à laquelle une durée de 1 minute est soustraite.

Ces étapes sont répétées à des intervalles de temps de 30 secondes à 3 minutes, pendant toute la phase de temporisation, de manière à afficher des autonomies réactualisées (Ar), par exemple la réactualisation peut se faire toutes les minutes.

Par ailleurs, les moyens de mémorisation permettent de mémoriser un historique comprenant au moins une partie et de préférence toutes les mesures de pression et de température qui ont été opérées par les moyens de mesure de pression et de température, i.e. un ou des capteurs.

Cet historique est alors utilisé par les moyens de traitement de données 5 pour affiner la détermination de l'autonomie à afficher. Ainsi, les moyens de traitement de données 5 peuvent calculer, après la phase initiale de temporisation, une autonomie calculée (Ac) à partir de l'historique des mesures de pression et de température du gaz mémorisées, et du volume interne 2 du récipient de gaz 1 qui est mémorisé.

Ensuite, en fonction de ce calcul, les moyens de traitement de données 5 opèrent une comparaison de l'autonomie ainsi calculée (Ac) à l'autonomie réactualisée (Ar) qui a été affichée sur les moyens d'affichage 6, comme expliqué cidessus et en fonction de cette comparaison, ils commandent ensuite un affichage sur les moyens d'affichage 6 soit de l'autonomie réactualisée (Ar) lorsque ils déterminent que : 0,9.Ar ≤ Ac ≤ 1,1.Ar, c'est-à-dire lorsque Ac diffère de moins de +/- 10% de Ar (exprimé en %), ou alors de l'autonomie calculée (Ac) lorsqu'ils déterminent que : Ac < 0,9.Ar ou Ac > 1,1 .Ar, c'est-à-dire que lorsque Ac diffère de plus de +/- 10% de Ar (exprimé en %).

Bien entendu, en lieu et place d'un pourcentage (%), la différence (ou seuil de calcul) pourrait être exprimée en unité de temps, typiquement en minutes, par exemple 30 minutes (ou une autre durée-seuil préfixée). Dans ce cas, les moyens d'affichage 6 commandent un affichage de l'autonomie réactualisée (Ar) lorsqu'ils déterminent qu'Ac diffère de moins de +/- 30 min de Ar, ou de l'autonomie calculée (Ac) lorsqu'ils déterminent qu'Ac diffère de plus de +/- 30 min de Ar.

L'affichage de l'autonomie est ensuite réactualisé cycliquement après une période réactualisation comprise entre 30 secondes et 3 minutes, qui est choisie en fonction de l'écart entre l'autonomie calculée (Ac) et l'autonomie réactualisée (Ar).

Ainsi, la durée de la période de réactualisation est de l'ordre de 1 minute lorsque l'autonomie calculée (Ac) est affichée sur les moyens d'affichage 6, donc lorsqu'Ac diffère de plus de +/- 30 min de Ar dans l'exemple précédent.

Dans tous les cas, les moyens de traitement de données 5 affichent toujours l'autonomie calculée (Ac) lorsque l'autonomie est inférieure ou égale à un seuil de sécurité préfixé, de préférence un seuil de sécurité inférieur ou égal à 30 minutes.

Autrement dit, sous un seuil de sécurité d'autonomie de gaz restant, par exemple 30 min, en cas d'autonomie calculée inférieure à l'autonomie mesurée, par sécurité, il convient de toujours actualiser l'autonomie affichée afin de ne pas surestimer l'affichage indiqué à l'utilisateur.

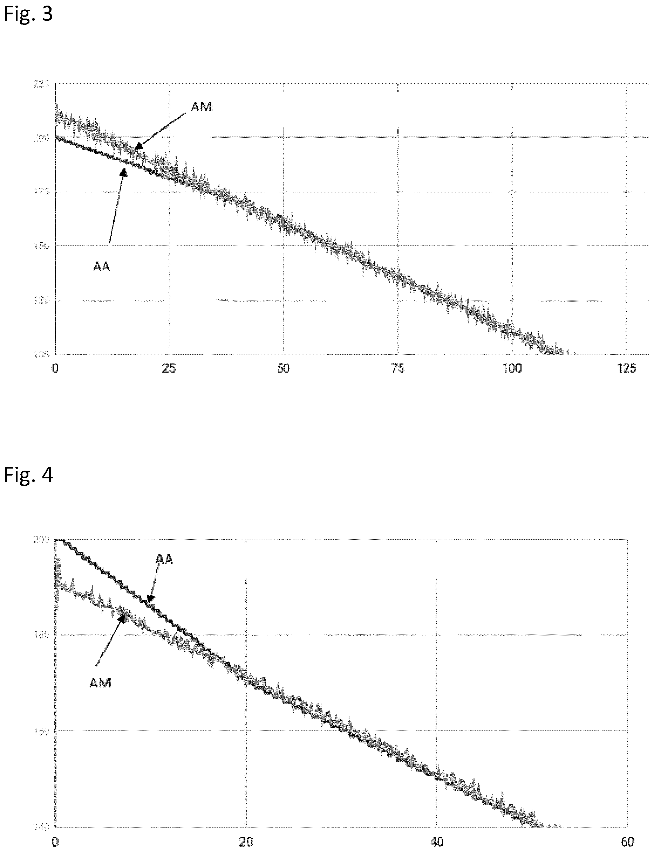

Fig. 3 à Fig. 5 sont des représentations des autonomies mesurées (AM) et des autonomies affichées (AA) pendant une baisse de pression gazeuse au sein d'une bouteille de gaz correspondant à l'utilisation de cette bouteille de gaz au fil du temps, i.e. durant un soutirage du gaz, dans trois situations différentes. L'échelle des ordonnées indique l'autonomie restante (exprimée en minutes), alors que l'échelle des abscisses représente le temps qui passe (exprimé en minutes).

Sur la Fig. 3, on voit que la courbe AA, représentant l'autonomie obtenue par calcul (AA) à partir de la position de la molette, de la pression mesurée et du volume de bouteille, donne une autonomie de 200 minutes en début d'utilisation de la bouteille de gaz, soit une autonomie affichée (AA) de 200 minutes. Ensuite, cette autonomie baisse « linéairement » minute par minute, c'est-à-dire que l'autonomie est réactualisée après 1 minute et l'autonomie réactualisée qui est affichée correspond à l'autonomie précédente à laquelle est déduite 1 minute, soit 199 minutes, puis 198 minutes etc....

Par ailleurs, les premières autonomies calculées à partir de la baisse de pression conduisent à une autonomie mesurée (AM) de l'ordre de 210 minutes, donc supérieure à l'autonomie affichée (AA), tout en restant dans un intervalle acceptable, c'est-à-dire moins de 10% d'erreur.

Partant de là, on « ajuste » les minutes affichées pour les faire durer un peu plus d'une minute pour faire converger l'autonomie affichée (AA) vers l'autonomie mesurée (AM). C'est ce que l'on voit ici par exemple durant les 25 premières minutes d'utilisation où l'affichage ne décroît que de 19 minutes (i.e. 19 paliers).

Après 30 minutes environ, les autonomies AM, AA ont convergé et sont corrélées, puisque les courbes d'autonomie (AA, AM) se confondent l'une à l'autre pour le reste de la durée d'utilisation de la bouteille de gaz.

Sur la Fig. 4, on voit, comme précédemment, que la courbe AA, représentant l'autonomie obtenue par calcul (AA) à partir de la position de la molette, de la pression mesurée et du volume de bouteille, donne une autonomie de 200 minutes en début d'utilisation de la bouteille de gaz, soit une autonomie affichée (AA) de 200 minutes, laquelle diminue ensuite minute par minute.

En parallèle, les premières autonomies calculées pour la baisse de pression constatée donnent une autonomie calculée (courbe AM) de l'ordre de seulement 190 minutes, donc inférieure à l'autonomie affichée (courbe AA), tout en restant là aussi dans un intervalle acceptable de moins de 10% d'erreur.

Dans ce cas, de façon inverse au cas précédent, les minutes affichées vont durer un peu moins d'une minute pour faire converger l'autonomie affichée (AA) vers l'autonomie mesurée (AA). C'est ce que l'on voit durant, par exemple durant les 20 premières minutes d'utilisation où l'affichage décroît de 29 minutes (i.e. 29 paliers). Au bout de 20 minutes environ, les autonomies sont à nouveau corrélées et les courbes AA et AM se confondent par la suite.

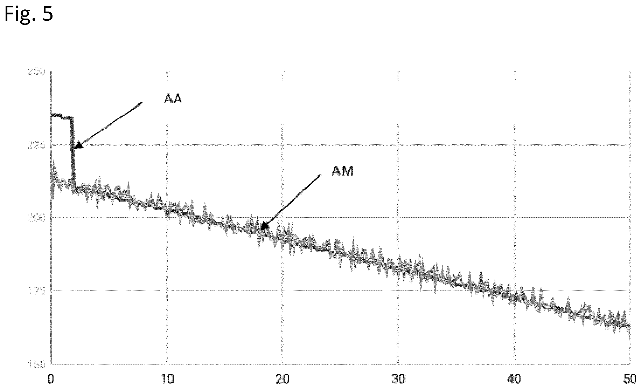

Par ailleurs, sur la Fig. 5, on voit que la courbe AA, représentant l'autonomie obtenue par calcul (AA) à partir de la position de la molette, de la pression mesurée et du volume de bouteille, donne une autonomie de 235 minutes, soit une autonomie affichée (AA) de 235 minutes. Cette autonomie baisse ensuite de minute en minute au début, i.e. le temps d'avoir un calcul fiable basé sur la décroissance de la pression, à savoir ici quelques minutes (jusqu'à la cassure de la courbe AA).

En parallèle, les premières autonomies calculées avec la baisse de pression donnent une autonomie de l'ordre de 210 minutes. Cette autonomie est inférieure à l'autonomie affichée et n'est pas dans un intervalle acceptable, c'est-à-dire qu'elle est de plus de 10% d'erreur. Les minutes affichées, c'est-à-dire l'autonomie affichée, vont donc s'ajuster directement pour converger immédiatement vers l'autonomie mesurée/calculée AM au niveau de la chute brutale sur la courbe AA. Les autonomies AA et AM sont corrélées et les courbes se confondent par la suite.

Ces trois exemples illustrent l'intérêt à procéder selon l'invention pour obtenir un affichage fiable et relativement précis de l'autonomie en gaz d'une bouteille de gaz ou analogue puisqu'ils montrent qu'au début de soutirage, i.e. d'utilisation du gaz, on peut se contenter d'afficher l'autonomie calculée (Ac) sur les moyens d'affichage 6, et procéder à une réactualisation, après un délai donné, par exemple de 1 minute, c'est-à-dire minute par minute, de l'affichage de l'autonomie affichée en affichant une autonomie réactualisée égale à l'autonomie précédemment affichée à laquelle la durée donnée, par exemple de 1 minute, est soustraite, et de répéter cette procédure, pendant toute la phase initiale de temporisation, pour afficher une autonomie réactualisée (Ar) après un intervalle de temps donné, typiquement compris entre 30 secondes et 3 minutes, par exemple toutes les minutes. La phase initiale de temporisation dure préférentiellement moins de 10 minutes.

Ensuite, après la phase initiale de temporisation, on calcule l'autonomie, i.e. l'autonomie calculée (Ac), à partir des mesures de pression qui ont été réalisées pendant les premières minutes d'utilisation et des mesures de température du gaz mémorisées, ainsi que du volume interne 2 du récipient de fluide et on affiche sur les moyens d'affichage 6, soit l'autonomie réactualisée (Ar) si elle ne diffère pas de +/-10% de l'autonomie calculée (Ac) (cf. Fig. 3 et Fig. 4), soit l'autonomie calculée Ac si elles diffèrent de +/-10% l'une de l'autre (cf. Fig. 5).

Un récipient de fluide selon l'invention est particulièrement bien adapté au stockage et à la distribution d'un gaz médical sous pression, typiquement de l'oxygène médicinal.

## Revendications

1. Récipient (1) de gaz sous pression, en particulier une bouteille de gaz, ayant un volume interne (2) donné, comprenant un robinet de distribution (3) de gaz comprenant :
- un organe de sélection du débit (12), manipulable par un utilisateur, entre plusieurs positions distinctes correspondant chacune à un débit de gaz donné,
- au moins un capteur de position configuré pour détecter la position de l'organe de sélection du débit (12),
- et un dispositif électronique (7) comprenant :
▪ des moyens de mesure de pression et de température pour mesurer la pression et la température du gaz contenu dans le récipient de gaz,
▪ des moyens de traitement de données (5) comprenant au moins un microprocesseur (15) configurés pour calculer une autonomie en gaz à partir de tout ou partie des mesures de pression et/ou de température, de la position de l'organe de sélection de débit (12) et du volume interne (2) du récipient,
▪ un compteur temporel,
▪ des moyens de mémorisation pour mémoriser au moins un historique comprenant les mesures de pression et de température opérées par les moyens de mesure de pression et de température,
▪ et des moyens d'affichage (6) pour afficher l'autonomie en gaz calculée par les moyens de traitement de données (5),
- les moyens de traitement de données (5) étant configurés pour :
A) pendant une phase initiale de temporisation inférieure à 10 minutes, débutant lorsque l'organe de sélection du débit (12) est manipulé par l'utilisateur pour le faire passer d'une première position correspondant à un premier débit de gaz à une deuxième position correspondant à un deuxième débit de gaz:
i) calculer une autonomie (AC) en gaz à partir de la position de l'organe de sélection du débit (12), des mesures de pression et de température du gaz, et du volume interne (2) du récipient de gaz, **caractérisé en ce que** les moyens de traitement de données sont configurés pour :
ii) commander un affichage de l'autonomie calculée (Ac) à l'étape A) i) sur les moyens d'affichage (6), et
iii) procéder à une réactualisation, après un délai de 1 minute, de l'affichage de l'autonomie affichée en commandant un affichage sur les moyens d'affichage (6), d'une autonomie réactualisée égale à l'autonomie affichée à laquelle une durée de 1 minute est soustraite,
B) répéter l'étape A) iii) pendant toute la phase initiale de temporisation, pour afficher une autonomie réactualisée (Ar) après un intervalle de temps compris entre 30 secondes et 3 minutes, pendant toute ladite phase initiale de temporisation, et
C) calculer, après la phase initiale de temporisation, au moins une autonomie calculée (Ac) à partir de l'historique des mesures de pression et de température du gaz mémorisées, et du volume interne (2) du récipient de gaz.

2. Récipient selon la revendication 1, **caractérisé en ce qu'**à l'étape B), l'autonomie réactualisée (Ar) est réactualisée et affichée à des intervalles de temps de l'ordre de 1 minute, c'est-à-dire minute par minute.

3. Récipient selon la revendication 1, **caractérisé en ce que** les moyens de traitement de données (5) sont en outre configurés pour :
D) comparer l'autonomie calculée (Ac) à l'autonomie réactualisée (Ar) affichée sur les moyens d'affichage (6) à l'étape B) et
E) commander un affichage sur les moyens d'affichage (6) de :
i. l'autonomie réactualisée (Ar) lorsque : 0,9.Ar ≤ Ac ≤ 1,1.Ar,
ou
ii. l'autonomie calculée (Ac) lorsque : Ac < 0,9.Ar ou Ac > 1,1.Ar.

4. Récipient selon la revendication 3, **caractérisé en ce que** les moyens de traitement de données (5) sont en outre configurés pour répéter les étapes C), D) et E) de manière à réactualiser l'affichage de l'autonomie après une période de réactualisation comprise entre 30 secondes et 3 minutes.

5. Récipient selon la revendication 4, **caractérisé en ce que** les moyens de traitement de données (5) sont en outre configurés pour fixer la durée de la période de réactualisation en fonction de l'écart entre l'autonomie calculée (Ac) et l'autonomie réactualisée (Ar).

6. Récipient selon les revendications 4 ou 5, **caractérisé en ce que** la durée de la période de réactualisation est de l'ordre de 1 minute lorsqu'à l'étape E) ii), l'autonomie calculée (Ac) est affichée sur les moyens d'affichage (6).

7. Récipient selon la revendication 3, **caractérisé en ce que** les moyens de traitement de données (5) sont configurés pour afficher l'autonomie calculée (Ac) lorsque lesdits moyens de traitement de données (5) déterminent, à l'étape D), que l'autonomie calculée (Ac) et l'autonomie réactualisée (Ar) différent l'une de l'autre d'au moins 10 minutes, de préférence d'au moins 15 minutes.

8. Récipient selon la revendication 3, **caractérisé en ce que** les moyens de traitement de données (5) sont configurés pour afficher l'autonomie calculée (Ac) lorsque l'autonomie est inférieure ou égale à l'autonomie réactualisée (Ar).

9. Récipient selon la revendication 1, **caractérisé en ce que** les moyens de traitement de données (5) comprennent un ou plusieurs microprocesseurs.

10. Récipient selon l'une des revendications 1 ou 9, **caractérisé en ce que** le compteur temporel est intégré aux moyens de traitement de données.

11. Récipient selon la revendication 1, **caractérisé en ce que** l'organe de sélection de débit est configuré pour adopter plusieurs positions distinctes correspondant chacune à un débit de gaz donné compris entre 0 et 30 L/min, ledit organe de sélection du débit étant manipulable en rotation par un utilisateur pour sélectionner le débit désiré.

12. Récipient selon la revendication 9, **caractérisé en ce que** les moyens de mesure de pression et de température comprennent un ou des capteurs de pression et de température.

13. Récipient selon les revendications 1 et 9, **caractérisé en ce que** le ou les microprocesseurs sont configurés pour traiter la ou les mesures de pression et de température fournies par le ou les capteurs de pression et de température.

## Patentansprüche

1. Druckgasbehälter (1), insbesondere eine Gasflasche, mit einem gegebenen Innenvolumen (2), beinhaltend ein Gasabgabeventil (3), das Folgendes beinhaltet:
- ein Auswahlorgan für den Durchfluss (12), das durch einen Benutzer zwischen mehreren unterschiedlichen Positionen, die jeweils einem gegebenen Gasdurchfluss entsprechen, betätigbar ist,
- mindestens einen Positionssensor, der dazu konfiguriert ist, die Position des Auswahlorgans für den Durchfluss (12) zu detektieren,
- und eine elektronische Vorrichtung (7), die Folgendes beinhaltet:
▪ Druck- und Temperaturmessmittel, um den Druck und die Temperatur des in dem Gasbehälter enthaltenen Gases zu messen,
▪ Datenverarbeitungsmittel (5), die mindestens einen Mikroprozessor (15) beinhalten und dazu konfiguriert sind, anhand aller oder eines Teils der Druck- und/oder Temperaturmessungen, der Position des Durchflussauswahlorgans (12) und des Innenvolumens (2) des Behälters eine Gasrestlaufzeit zu berechnen,
▪ einen Zeitzähler,
▪ Speichermittel zum Speichern mindestens eines Verlaufs, der die Druck- und Temperaturmessungen beinhaltet, die durch die Druck- und Temperaturmessmittel durchgeführt werden,
▪ und Anzeigemittel (6) zum Anzeigen der Gasrestlaufzeit, die durch die Datenverarbeitungsmittel (5) berechnet wird,
- wobei die Datenverarbeitungsmittel (5) zu Folgendem konfiguriert sind:
A) während einer anfänglichen Verzögerungsphase, die weniger als 10 Minuten beträgt und beginnt, wenn das Auswahlorgan für den Durchfluss (12) durch den Benutzer betätigt wird, um es von einer ersten Position, die einem ersten Gasdurchfluss entspricht, in eine zweite Position, die einem zweiten Gasdurchfluss entspricht, zu bewegen:
i) Berechnen einer Gasrestlaufzeit (AC) anhand der Position des Auswahlorgans für den Durchfluss (12), der Druck- und Temperaturmessungen des Gases und des Innenvolumens (2) des Gasbehälters, **dadurch gekennzeichnet, dass** die Datenverarbeitungsmittel zu Folgendem konfiguriert sind:
ii) Anordnen einer Anzeige der in Schritt A) i) berechneten Restlaufzeit (Ac) auf den Anzeigemitteln (6) und
iii) Vornehmen einer Aktualisierung, nach Ablauf von 1 Minute, der Anzeige der angezeigten Restlaufzeit durch Anordnen einer Anzeige, auf den Anzeigemitteln (6), einer aktualisierten Restlaufzeit, die gleich der angezeigten Restlaufzeit ist, von der eine Dauer von 1 Minute abgezogen wird,
B) Wiederholen des Schritts A) iii) während der gesamten anfänglichen Verzögerungsphase, um während der gesamten anfänglichen Verzögerungsphase eine aktualisierte Restlaufzeit (Ar) nach einem Zeitintervall zwischen 30 Sekunden und 3 Minuten anzuzeigen, und
C) Berechnen, nach der anfänglichen Verzögerungszeit, mindestens einer anhand des Verlaufs der gespeicherten Druck- und Temperaturmessungen des Gases und des Innenvolumens (2) des Gasbehälters berechneten Restlaufzeit (Ac).

2. Behälter nach Anspruch 1, **dadurch gekennzeichnet, dass** in Schritt B) die aktualisierte Restlaufzeit (Ar) in Zeitintervallen in der Größenordnung von 1 Minute, das heißt jede Minute, aktualisiert und angezeigt wird.

3. Behälter nach Anspruch 1, **dadurch gekennzeichnet, dass** die Datenverarbeitungsmittel (5) ferner zu Folgendem konfiguriert sind:
D) Vergleichen der berechneten Restlaufzeit (Ac) mit der in Schritt B) auf den Anzeigemitteln (6) angezeigten aktualisierten Restlaufzeit (Ar) und
E) Anordnen einer Anzeige, auf den Anzeigemitteln (6):
i. der aktualisierten Restlaufzeit (Ar), wenn: 0,9.Ar ≤ Ac ≤ 1,1.Ar, oder
ii. der berechneten Restlaufzeit (Ac), wenn: Ac < 0,9.Ar oder Ac > 1,1.Ar.

4. Behälter nach Anspruch 3, **dadurch gekennzeichnet, dass** die Datenverarbeitungsmittel (5) ferner dazu konfiguriert sind, die Schritte C), D) und E) zu wiederholen, um die Anzeige der Restlaufzeit nach einer Aktualisierungsperiode zwischen 30 Sekunden und 3 Minuten zu aktualisieren.

5. Behälter nach Anspruch 4, **dadurch gekennzeichnet, dass** die Datenverarbeitungsmittel (5) ferner dazu konfiguriert sind, die Dauer der Aktualisierungsperiode in Abhängigkeit von der Abweichung zwischen der berechneten Restlaufzeit (Ac) und der aktualisierten Restlaufzeit (Ar) festzulegen.

6. Behälter nach den Ansprüchen 4 oder 5, **dadurch gekennzeichnet, dass** die Dauer der Aktualisierungsperiode in der Größenordnung von 1 Minute liegt, wenn in Schritt E) ii) die berechnete Restlaufzeit (Ac) auf den Anzeigemitteln (6) angezeigt wird.

7. Behälter nach Anspruch 3, **dadurch gekennzeichnet, dass** die Datenverarbeitungsmittel (5) dazu konfiguriert sind, die berechnete Restlaufzeit (Ac) anzuzeigen, wenn die Datenverarbeitungsmittel (5) in Schritt D) bestimmen, dass die berechnete Restlaufzeit (Ac) und die aktualisierte Restlaufzeit (Ar) um mindestens 10 Minuten, vorzugsweise um mindestens 15 Minuten, voneinander abweichen.

8. Behälter nach Anspruch 3, **dadurch gekennzeichnet, dass** die Datenverarbeitungsmittel (5) dazu konfiguriert sind, die berechnete Restlaufzeit (Ac) anzuzeigen, wenn die Restlaufzeit kleiner als oder gleich der aktualisierten Restlaufzeit (Ar) ist.

9. Behälter nach Anspruch 1, **dadurch gekennzeichnet, dass** die Datenverarbeitungsmittel (5) einen oder mehrere Mikroprozessoren beinhalten.

10. Behälter nach einem der Ansprüche 1 oder 9, **dadurch gekennzeichnet, dass** der Zeitzähler in die Datenverarbeitungsmittel integriert ist.

11. Behälter nach Anspruch 1, **dadurch gekennzeichnet, dass** das Durchflussauswahlorgan dazu konfiguriert ist, mehrere unterschiedliche Positionen einzunehmen, die jeweils einem gegebenen Gasdurchfluss zwischen 0 und 30 l/min entsprechen, wobei das Auswahlorgan für den Durchfluss durch einen Benutzer drehbetätigbar ist, um den gewünschten Durchfluss auszuwählen.

12. Behälter nach Anspruch 9, **dadurch gekennzeichnet, dass** die Druck- und Temperaturmessmittel einen oder mehrere Druck- und Temperatursensoren beinhalten.

13. Behälter nach den Ansprüchen 1 und 9, **dadurch gekennzeichnet, dass** der oder die Mikroprozessoren dazu konfiguriert sind, die eine oder die mehreren Druck- und Temperaturmessungen zu verarbeiten, die durch den oder die Druck- und Temperatursensoren bereitgestellt werden.

## Claims

1. Container (1) for pressurized gas, in particular a gas cylinder, having a given internal volume (2), comprising a gas distribution valve (3) comprising:
- a member (12) for selecting the flow rate, which can be manipulated by a user between a plurality of distinct positions, each corresponding to a given gas flow rate,
- at least one position sensor configured to detect the position of the member (12) for selecting the flow rate,
- and an electronic device (7) comprising:
▪ means for measuring pressure and temperature in order to measure the pressure and the temperature of the gas contained in the gas container,
▪ data processing means (5) comprising at least one microprocessor (15) which are configured to calculate a remaining gas on the basis of all or some of the pressure and/or temperature measurements, of the position of the member (12) for selecting the flow rate and of the internal volume (2) of the container,
▪ a timer,
▪ storage means for storing at least one history comprising the pressure and temperature measurements taken by the means for measuring pressure and temperature,
▪ and display means (6) for displaying the remaining gas calculated by the data processing means (5),
- the data processing means (5) being configured to:
A) for an initial delay phase shorter than 10 minutes, starting when the member (12) for selecting the flow rate is manipulated by the user in order to move it from a first position corresponding to a first gas flow rate to a second position corresponding to a second gas flow rate:
i) calculate a remaining gas (AC) on the basis of the position of the member (12) for selecting the flow rate, of the measurements of the pressure and temperature of the gas, and of the internal volume (2) of the gas container, **characterized in that** the data processing means are configured to:
ii) control displaying of the remainder (Ac) calculated in step A) i) on the display means (6), and
iii) update, after a period of 1 minute, the displaying of the displayed remainder by controlling displaying, on the display means (6), of an updated remainder equal to the displayed remainder minus a duration of 1 minute,
B) repeat step A) iii) throughout the initial delay phase, to display an updated remainder (Ar) after a time interval of between 30 seconds and 3 minutes throughout said initial delay phase, and
C) calculate, after the initial delay phase, at least one remainder (Ac) calculated on the basis of the history of the stored measurements of the pressure and temperature of the gas, and of the internal volume (2) of the gas container.

2. Container according to Claim 1, **characterized in that**, in step B), the updated remainder (Ar) is updated and displayed at time intervals of the order of 1 minute, i.e. every minute.

3. Container according to Claim 1, **characterized in that** the data processing means (5) are further configured to:
D) compare the calculated remainder (Ac) with the updated remainder (Ar) displayed on the display means (6) in step B) and
E) control displaying, on the display means (6), of:
i. the updated remainder (Ar) when: 0.9.Ar ≤ Ac ≤ 1.1.Ar, or
ii. the calculated remainder (Ac) when: Ac < 0.9.Ar or Ac > 1.1.Ar.

4. Container according to Claim 3, **characterized in that** the data processing means (5) are further configured to repeat steps C), D) and E) so as to update the displaying of the remainder after an updating period of between 30 seconds and 3 minutes.

5. Container according to Claim 4, **characterized in that** the data processing means (5) are further configured to set the duration of the updating period according to the difference between the calculated remainder (Ac) and the updated remainder (Ar).

6. Container according to Claim 4 or 5, **characterized in that** the duration of the updating period is of the order of 1 minute when, in step E) ii), the calculated remainder (Ac) is displayed on the display means (6).

7. Container according to Claim 3, **characterized in that** the data processing means (5) are configured to display the calculated remainder (Ac) when said data processing means (5) determine, in step D), that the calculated remainder (Ac) and the updated remainder (Ar) differ from one another by at least 10 minutes, preferably by at least 15 minutes.

8. Container according to Claim 3, **characterized in that** the data processing means (5) are configured to display the calculated remainder (Ac) when the remainder is smaller than or equal to the updated remainder (Ar).

9. Container according to Claim 1, **characterized in that** the data processing means (5) comprise one or more microprocessors.

10. Container according to either of Claims 1 and 9, **characterized in that** the timer is integrated into the data processing means.

11. Container according to Claim 1, **characterized in that** the member for selecting the flow rate is configured to adopt a plurality of distinct positions each corresponding to a given gas flow rate between 0 and 30 L/min, said member for selecting the flow rate being able to be rotatably manipulated by a user in order to select the desired flow rate.

12. Container according to Claim 9, **characterized in that** the means for measuring pressure and temperature comprise one or more pressure and temperature sensors.

13. Container according to Claims 1 and 9, **characterized in that** the one or more microprocessors are configured to process the one or more pressure and temperature measurements provided by the one or more pressure and temperature sensors.
